(19) Europäisches Patentamt
European Patent Office
Office européen des brevets

(11) EP 2 587 813 A2

(12) EUROPEAN PATENT APPLICATION

(43) Date of publication:
**01.05.2013 Bulletin 2013/18**

(51) Int Cl.:
***H04N 13/00*** *(2006.01)*

(21) Application number: **12189769.8**

(22) Date of filing: **24.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2011 KR 20110109360**
**20.01.2012 KR 20120006759**
**01.02.2012 KR 20120010324**

(71) Applicant: **Samsung Electronics Co., Ltd**
**Gyeonggi-do 443-742 (KR)**

(72) Inventors:
- **Lee, Jae Joon**
  **443-742 Gyeonggi-do (KR)**
- **Lee, Jin Young**
  **443-742 Gyeonggi-do (KR)**

(74) Representative: **Jacobs, Bart**
**Arnold & Siedsma**
**Sweelinckplein 1**
**2517 GK Den Haag (NL)**

# (54) Apparatus and method for encoding and decoding using virtual view synthesis prediction

(57) An apparatus and method for encoding and decoding using view synthesis prediction are provided. The apparatus synthesizes imagers corresponding to peripheral views of a current view, and encodes current blocks included in an image of the current view by a currently defined encoding mode or an encoding mode related to virtual view synthesis prediction, according to a coding unit.

101
201
SYNTHESIZED IMAGE GENERATION UNIT
202
ENCODING MODE DETERMINATION UNIT
203
IMAGE ENCODING UNIT
204
FLAG SETTING UNIT
BIT STREAM
102
DECODING APPARATUS

FIG. 2

EP 2 587 813 A2

Printed by Jouve, 75001 PARIS (FR)

## Description

BACKGROUND

1. Field

One or more example embodiments of the following description relate to an apparatus and method for encoding and decoding a 3-dimensional (3D) video, and more particularly, to an apparatus and method for applying a result of synthesizing images corresponding to peripheral views of a current view during encoding and decoding.

2. Description of the Related Art

A stereoscopic image refers to a 3-dimensional (3D) image that supplies shape information on both depth and space of an image. Whereas a stereo image supplies images of different views to left and right eyes of a viewer, respectively, the stereoscopic image is seen as if viewed from different directions as a viewer varies his or her point of view. Therefore, images taken from many different views are necessary to generate the stereoscopic image.

The different views used for generating the stereoscopic image result in a large amount of data. Therefore, in consideration of network infrastructure, a terrestrial bandwidth, bandwidth limitations, and the like, it is impracticable to embody the stereoscopic image using the images even when the images are compressed by an encoding apparatus optimized for single-view video coding, such as moving picture expert group (MPEG)-2, H.264/AVC, or high efficiency video coding (HEVC).

SUMMARY

The foregoing and/or other aspects are achieved by providing an encoding apparatus including a synthesized image generation unit to generate a synthesized image of a virtual view by synthesizing first images of peripheral views, the first images which are already encoded, an encoding mode determination unit to determine an encoding mode of each of at least one block constituting a coding unit, among blocks included in a second image of a current view, and an image encoding unit to generate a bit stream by encoding the at least one block constituting the coding unit based on the encoding mode, wherein the encoding mode includes an encoding mode related to virtual view synthesis prediction.

The encoding apparatus may further include a flag setting unit to set, in the bit stream, a first flag for informing whether the at least one block constituting the coding unit is split, a second flag for recognition of a skip mode related to the virtual view synthesis prediction, and a third flag for recognition of a currently defined skip mode.

The foregoing and/or other aspects are achieved by providing an encoding apparatus including an encoding mode determination unit to determine any one of an encoding mode related to virtual view synthesis prediction and a currently defined encoding mode to be an optimum encoding mode, with respect to at least one block constituting a coding unit, and an image encoding mode to generate a bit stream by encoding the at least one block constituting the coding unit based on the encoding mode.

The encoding apparatus may further include a flag setting unit to set, in the bit stream, a first flag for informing whether the at least one block constituting the coding unit is split, a second flag for recognition of a skip mode related to the virtual view synthesis prediction, and a third flag for recognition of a currently defined skip mode.

The foregoing and/or other aspects are also achieved by providing a decoding apparatus including a synthesized image generation unit to generate a synthesized image of a virtual view by synthesizing first images of peripheral views which are already decoded, and an image decoding unit to decode at least one block constituting a coding unit among blocks included in a second image of a current view, using a decoding mode extracted from a bit stream received from an encoding apparatus, wherein the decoding mode includes a decoding mode related to virtual view synthesis prediction.

The foregoing and/or other aspects are also achieved by providing an encoding method performed by an encoding apparatus, the encoding method including generating a synthesized image of a virtual view by synthesizing first images of peripheral views, the first images which are already encoded, determining an encoding mode of each of at least one block constituting a coding unit, among blocks included in a second image of a current view, and generating a bit stream by encoding the at least one block constituting the coding unit based on the encoding mode, wherein the encoding mode includes an encoding mode related to virtual view synthesis prediction.

The encoding method may further include setting, in the bit stream, a first flag for informing whether the at least one block constituting the coding unit is split, a second flag for recognition of a skip mode related to the virtual view synthesis prediction, and a third flag for recognition of a currently defined skip mode.

The foregoing and/or other aspects are also achieved by providing an encoding method including determining any one of an encoding mode related to virtual view synthesis prediction and a currently defined encoding mode as an optimum encoding mode, with respect to at least one block constituting a coding unit, and generating a bit stream by encoding the at least one block constituting the coding unit based on the encoding mode.

The encoding method may further include setting, in the bit stream, a first flag for informing whether the at least one block constituting the coding unit is split, a second flag for recognition of a skip mode related to the virtual view synthesis prediction, and a third flag for recognition of a currently defined skip mode.

The foregoing and/or other aspects are also achieved by providing a decoding method including generating a synthesized image of a virtual view by synthesizing first images of peripheral views which are already decoded, and decoding at least one block constituting a coding unit among blocks included in a second image of a current view, using a decoding mode extracted from a bit stream received from an encoding apparatus, wherein the decoding mode includes a decoding mode related to virtual view synthesis prediction.

The decoding method may further include extracting, from the bit stream, a first flag for informing whether the at least one block constituting the coding unit is split, a second flag for recognition of a skip mode related to the virtual view synthesis prediction, and a third flag for recognition of a currently defined skip mode.

The foregoing and/or other aspects are also achieved by providing a recording medium storing a bit stream transmitted from an encoding apparatus to a decoding apparatus, wherein the bit stream includes a first flag for informing whether at least one block constituting a coding unit is split, a second flag for recognition of a skip mode related to virtual view synthesis prediction, and a third flag for recognition of a currently defined skip mode.

The foregoing and/or other aspects are also achieved by providing an encoding apparatus that includes a synthesized image generation unit to generate a synthesized image of a virtual view by synthesizing a plurality of already encoded first images of peripheral views, an encoding mode determination unit to determine an encoding mode for at least one block constituting a coding unit from among blocks included in a second image of a current view, and an image encoding unit to generate a bit stream by encoding the at least one block of the current view based on the encoding mode determined by the encoding mode determination unit and using at least one block of the synthesized image generated by the synthesized image generation unit for the encoding.

Additional aspects, features, and/or advantages of example embodiments will be set forth in part in the description which follows and, in part, will be apparent from the description, or may be learned by practice of the disclosure.

BRIEF DESCRIPTION OF THE DRAWINGS

These and/or other aspects and advantages will become apparent and more readily appreciated from the following description of the example embodiments, taken in conjunction with the accompanying drawings of which:

FIG. 1 illustrates an operation of an encoding apparatus and a decoding apparatus according to example embodiments;
FIG. 2 illustrates a detailed structure of an encoding apparatus according to example embodiments;
FIG. 3 illustrates a detailed structure of a decoding apparatus according to example embodiments;
FIG. 4 illustrates a structure of a multiview video according to example embodiments;
FIG. 5 illustrates an encoding system applying an encoding apparatus according to example embodiments;
FIG. 6 illustrates a decoding system applying a decoding apparatus according to example embodiments;
FIG. 7 illustrates a virtual view synthesis prediction method according to example embodiments;
FIG. 8 illustrates a skip mode of the virtual view synthesis prediction method, according to example embodiments;
FIG. 9 illustrates a residual signal encoding mode of the virtual view synthesis prediction method, according to example embodiments;
FIG. 10 illustrates blocks constituting a coding unit, according to example embodiments; and
FIG. 11 illustrates a bit stream including a flag, according to example embodiments.

DETAILED DESCRIPTION

Reference will now be made in detail to example embodiments, examples of which are illustrated in the accompanying drawings, wherein like reference numerals refer to the like elements throughout. Example embodiments are described below to explain the present disclosure by referring to the figures.

According to one or more example embodiments, when blocks of a current view are encoded, a synthesized image of a virtual view is generated by synthesizing images of peripheral views and the encoding is performed using the synthesized image. Accordingly, temporal redundancy between views is removed, consequently increasing encoding efficiency.

Additionally, according to one or more example embodiments, in addition to a currently defined skip mode, a skip mode based on the synthesized image of the virtual view may be further used. Therefore, more skip modes may be selected during encoding of a current image. Accordingly, the encoding efficiency may be increased.

Additionally, according to one or more example embodiments, an encoding mode is determined according to a block constituting a coding unit. Therefore, the encoding efficiency may be increased.

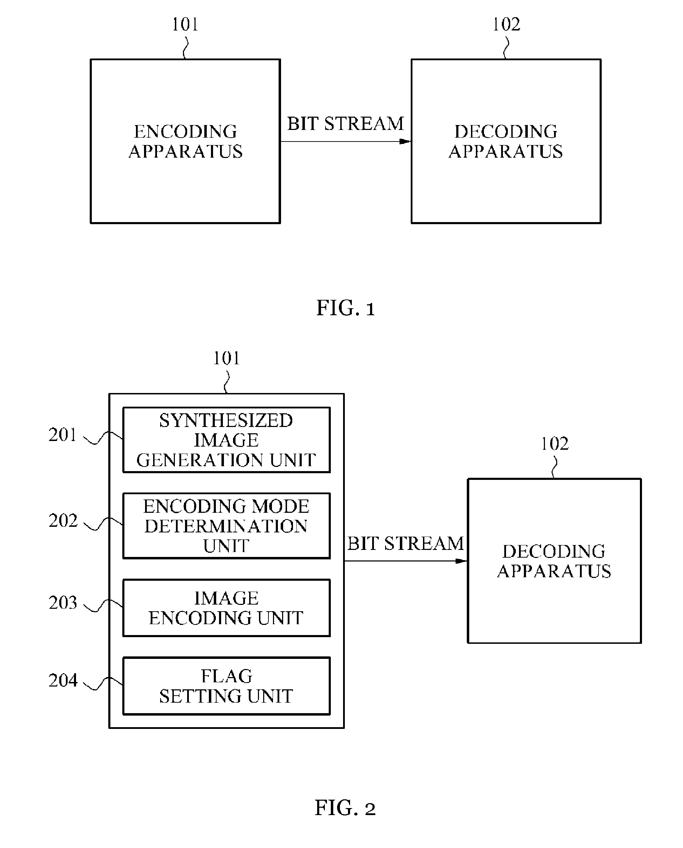

FIG. 1 illustrates an operation of an encoding apparatus 101 and a decoding apparatus 102 according to example embodiments.

The encoding apparatus 101 may encode a 3-dimensional (3D) video and transmit the encoded 3D video to the decoding apparatus 102 in the form of a bit stream. During the encoding of the 3D video, the encoding apparatus 101, according to the example embodiments, may minimize redundancy among images thereby increasing encoding efficiency.

To remove the redundancy among images, any one or more of intra, inter, and inter-view prediction methods may be used. Additionally, various encoding modes such as a skip mode, 2N x 2N mode, N x N mode, 2N x N mode, N x 2N mode, intra mode, and the like may be used for prediction of a block. The skip mode does not encode block information and therefore may reduce a bit rate compared with other encoding modes. Therefore, the encoding efficiency may be improved as the skip mode is applied to more blocks during encoding of an image.

According to one or more example embodiments, in addition to the skip mode described above, a virtual view synthesis prediction mode may be defined based on a synthesized image of a virtual view. In this case, more blocks constituting a current image may be encoded by the skip mode by a higher probability. Here, the encoding apparatus 101 may generate the synthesized image of the virtual view by synthesizing images of peripheral views, which are already encoded, and then encoding an image of the current view using the synthesized image.

In example embodiments, the term "virtual view synthesis prediction" denotes that the image of the current view to be encoded is predicted using the synthesized image of the virtual view generated by synthesizing the already encoded images of the peripheral views. That is, virtual view synthesis prediction means that a block included in the synthesized image of the virtual view is used for encoding a current block included in the image of the current view.
The term "virtual view" may denote a view that is the same as the current view. That is, in an embodiment, a virtual view is observed from a same reference point as the current view.

In the following description, the term "first image" will denote the already encoded image of the peripheral view, the term "second image" will denote the image of the current view to be encoded by an encoding apparatus, and the term "synthesized image" will denote the image synthesized from the first images of the peripheral views. The synthesized image and the second image may represent the same current view. In addition, an encoding mode related to the virtual view synthesis prediction may be divided into a virtual view synthesis skip mode and a virtual view synthesis residual signal encoding mode.

FIG. 2 illustrates a detailed structure of an encoding apparatus 101 according to example embodiments.

Referring to FIG. 2, the encoding apparatus 101 may include, for example, a synthesized image generation unit 201, an encoding mode determination unit 202, an image encoding unit 203, and a flag setting unit 204.

The synthesized image generation unit 201 may generate a synthesized image of a virtual view by synthesizing a plurality of first images of peripheral views, which are already encoded. The term "peripheral views" refers to views corresponding to peripheral images of a second image of a current view. The term "virtual view" refers to the same view as the view of the second image to be encoded.

The encoding mode determination unit 202 may determine an encoding mode for each of at least one block constituting a coding unit among blocks included in the second image of the current view. For example, the encoding mode may include the encoding mode related to virtual view synthesis prediction. The encoding mode related to virtual view synthesis prediction may include a first encoding mode, which is a skip mode that does not encode block information in the virtual view synthesis prediction. Here, the first encoding mode may be defined as the virtual view synthesis skip mode.

In addition, the encoding mode related to virtual view synthesis prediction may include a second mode which is a residual signal encoding mode that encodes the block information. Furthermore, the second encoding mode may be defined as a virtual view synthesis residual signal encoding mode. Alternatively, the encoding mode related to virtual view synthesis prediction may include both the first encoding mode and the second encoding mode.

The first encoding mode and the second encoding mode may use a zero vector block that is in the same location as the current block included in the second image, in the synthesized image of the virtual view. The term "zero vector block" refers to a block indicated by a zero vector with respect to the current block among the blocks constituting the synthesized image of the virtual view.

To be more specific, the first encoding mode may refer to a skip mode that searches for the zero vector block that is in the same location as the current block to be encoded in the synthesized image of the virtual view, and replaces the current block to be encoded with the zero vector block. The second encoding mode may refer to a residual signal encoding mode that searches for the zero vector block that is in the same location as the current block to be encoded in the synthesized image of the virtual view, and performs residual signal encoding based on a prediction block that is most similar to the current block to be encoded with respect to the zero vector block and on a virtual synthesis vector indicating the prediction block.

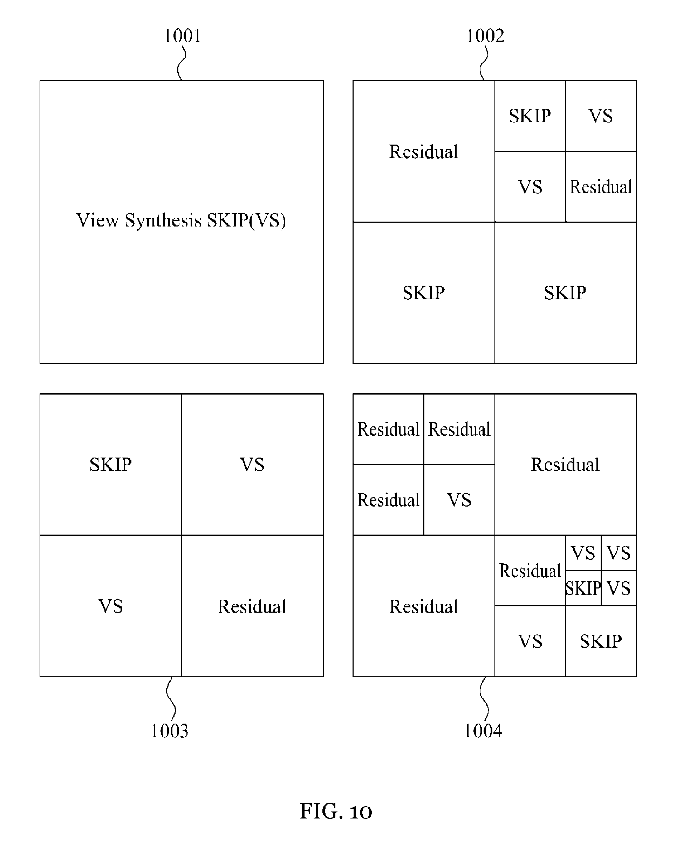

In addition, the coding unit refers to a reference factor for encoding of the blocks constituting the image of the current view. The coding unit may be split into sub-blocks according to the encoding efficiency. The encoding mode determination unit 202 may determine the encoding mode for at least one sub-block constituting the coding unit. The coding unit will be described in detail with reference to FIG. 10.

The encoding mode determination unit 202 may determine an optimum encoding mode having a highest encoding efficiency, from among the encoding mode related to virtual view synthesis prediction and a currently defined encoding mode. Highest encoding efficiency may denote a minimum cost function. The encoding efficiency may be measured by a number of bits generated during encoding of the image of the current view, and a distortion level of the encoded image of the current view. The currently defined encoding mode may include a skip mode, inter 2N x 2N mode, inter 2N x N mode, inter N x 2N mode, inter N x N mode, intra 2N x 2N mode, intra N x N mode, and the like. According to other example embodiments, the currently defined encoding mode may include the skip mode, the inter mode, and the intra mode. The currently defined encoding mode may include other types of encoding modes and is not limited to the preceding examples.

The encoding mode determination unit 202 may selectively use the encoding mode related to virtual view synthesis prediction. For example, when the skip mode included in the currently defined encoding mode is determined to be the optimum encoding mode, the encoding efficiency of the encoding mode related to virtual view synthesis prediction may be excluded. That is, when the skip mode currently defined is determined to be the optimum encoding mode, the encoding mode determination unit 202 may not use the encoding mode related to virtual view synthesis prediction.

The image encoding unit 203 may generate a bit stream by encoding the at least one block constituting the coding unit based on the encoding mode.

The flag setting unit 204 may set a first flag for informing whether the at least one block constituting the coding unit is split, a second flag to provide for recognition of a skip mode related to the virtual view synthesis prediction, and a third flag to provide for recognition of a currently defined skip mode, in the bit stream.

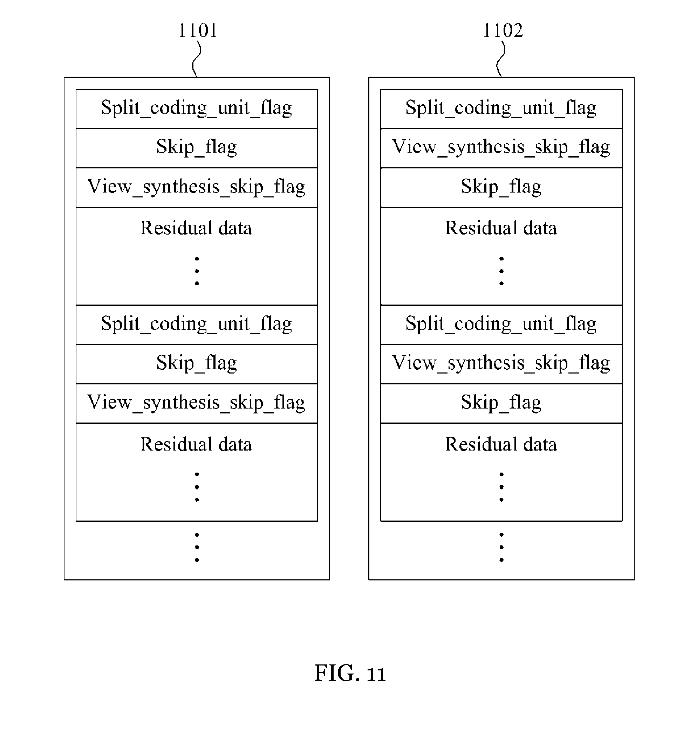

For example, the flag setting unit 204 may locate the second flag after the third flag or locate the third flag after the second flag, in the bit stream. Also, the flag setting unit 204 may locate the second flag after the first flag or locate the third flag after the first flag, in the bit stream. Additionally, the flag setting unit 204 may locate the third flag between the first flag and the second flag or locate the second flag between the first flag and the third flag, in the bit stream. That is, the flags may appear in any order. The setting of the flags in the bit stream will be described in further detail with reference to FIG. 11.

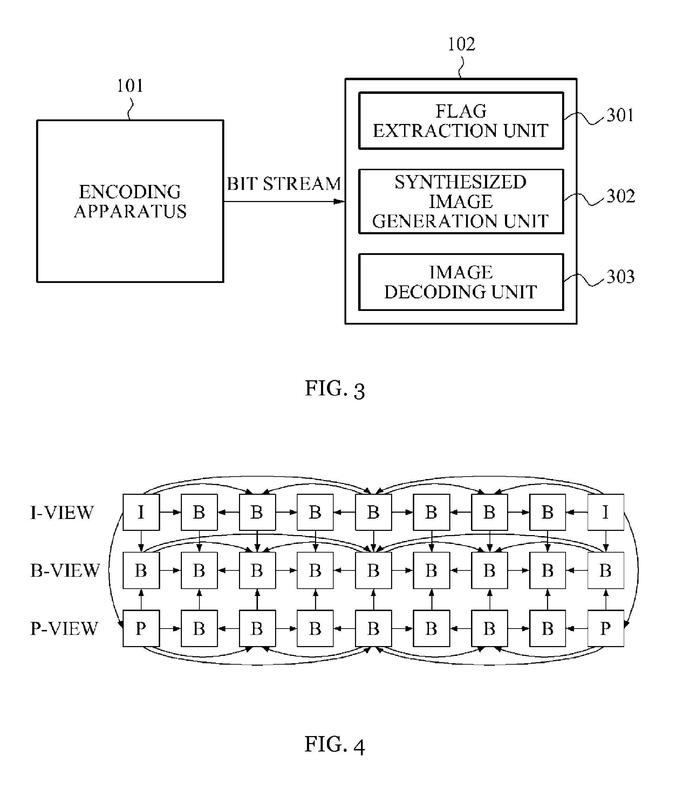

FIG. 3 illustrates a detailed structure of a decoding apparatus 102 according to example embodiments.

Referring to FIG. 3, the decoding apparatus 102 may include, for example, a flag extraction unit 301, a synthesized image generation unit 302, and an image decoding unit 303.

The flag extraction unit 301 may extract, from a bit stream, a first flag for informing whether the at least one block constituting the coding unit is split, a second flag to provide for recognition of a skip mode related to virtual view synthesis prediction, and a third flag to provide for recognition of a currently defined skip mode.

For example, in the bit stream, the second flag may be located after the third flag. Alternatively, the third flag may be located after the second flag.

As another example, in the bit stream, the second flag may be located after the first flag. In addition, the third flag may be located after the first flag.

As a further example, in the bit stream, the third flag may be located between the first flag and the second flag. Alternatively, the second flag may be located between the first flag and the third flag. That is, the flags in the bit stream may appear in any order.

The synthesized image generation unit 302 may generate a synthesized image of a virtual view, by synthesizing first images of the peripheral views, the first images being already decoded.

The image decoding unit 303 may extract a decoding mode from the bit stream received from the encoding apparatus 101, and decode the at least one block constituting the coding unit among the blocks included in a second image of a current view using the extracted decoding mode.

The decoding mode may include a decoding mode related to the virtual view synthesis prediction. Here, the decoding mode related to virtual view synthesis prediction may include a first decoding mode which is a skip mode that does not decode block information in the synthesized image of the virtual view, and a second decoding mode which is a residual signal decoding mode that decodes the block information. More specifically, the first decoding mode and the second decoding mode may use a zero vector block that is in the same location as the current block included in the second image in the synthesized image of the virtual view.

The first decoding mode and the second decoding mode may match the first encoding mode and the second encoding mode, respectively, and subsequently refer to the description of FIG. 2.

FIG. 4 illustrates a structure of multiview video according to example embodiments.

FIG. 4 illustrates a multiview video coding (MVC) method that encodes an input image made up of 3 views, for example. That is, the views include a left view, a center view, and a right view, using group of picture (GOP) 8. For encoding of a multiview image, a hierarchical B picture is generally applied in a temporal axis and a view axis. Therefore, redundancy among images may be reduced.

According to the multiview video structure shown in FIG. 4, a multiview video encoding apparatus may encode the image corresponding to the three views, by encoding a left image of an I-view, first, and then a right image of a P-view and a center view of a B-view in sequence.

Here, the left image may be encoded in such a manner that temporal redundancy is removed by searching a similar region from previous images through motion estimation. In this case, the right image is encoded using the left image which has already been encoded. That is, the right image may be encoded by removing temporal redundancy based on motion estimation and view redundancy based on disparity estimation. The center image is encoded using both the left image and the right image, which are already encoded. Therefore, when the center image is encoded, view redundancy may be removed through bidirectional disparity estimation.

Referring to FIG. 4, in the MVC method, an "I-view image" denotes an image, such as the left image, encoded without a reference image of another view. A "P-view image" denotes an image, such as the right image, encoded by predicting the reference image of another view in one direction. A "B-view image" denotes an image, such as the center image, encoded by predicting reference images of the left view and the right view in both directions.

A frame of the MVC may be divided into six groups according to the prediction structure. The six groups includes an I-view anchor frame for intra coding, an I-view non-anchor frame for inter coding between temporal axes, a P-view anchor frame for unidirectional inter-view coding, a P-view non-anchor frame for unidirectional inter-view inter coding and bidirectional inter coding between time axes, a B-view anchor frame for bidirectional inter-view inter coding, and a B-view non-anchor frame for bidirectional inter-view inter coding and bidirectional inter coding between temporal axes.

According to example embodiments, the encoding apparatus 101 may generate the synthesized image of the virtual view by synthesizing the first images of the peripheral views, that is, the left view and the right view of the current view to be encoded, and by encoding the second image of the current view using the synthesized image. Here, the first images of the peripheral views, necessary for synthesizing, may already be encoded images.

The encoding apparatus 101 may encode the P-view image by synthesizing the already encoded I-view image. Alternatively, the encoding apparatus 101 may encode the B-view image by synthesizing the already encoded I-view image and P-view image. That is, the encoding apparatus 101 may encode a specific image by synthesizing an already encoded image located nearby.

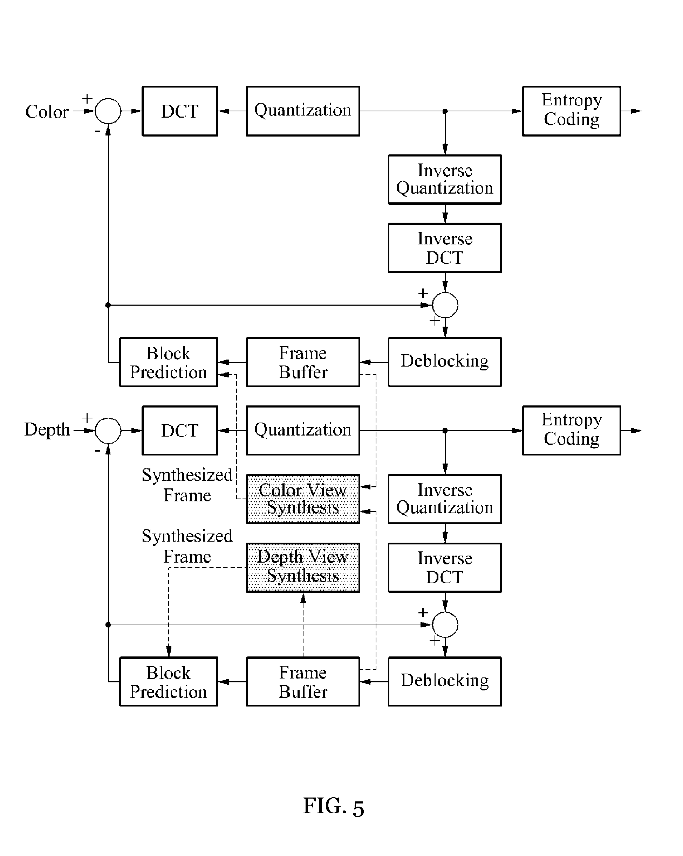

FIG. 5 illustrates an encoding system applying an encoding apparatus according to example embodiments.

A color image and a depth image constituting a 3D video may be encoded and decoded separately. Referring to FIG. 5, encoding may be performed by obtaining a residual signal between an original image and a predicted image deduced by block-based prediction, and then converting and quantizing the residual signal. In addition, deblocking filtering is performed for accurate prediction of next images.

As a size of the residual signal is relatively small, a number of bits necessary for encoding is reduced. Therefore, similarity between the predicted image and the original image matters. According to the example embodiments, for prediction of a block, not only the skip mode and the residual signal encoding mode related to intra prediction, inter prediction, and inter-view prediction, but also virtual view synthesis prediction may be applied.

Referring to FIG. 5, an additional structure for the virtual view synthesis is needed to generate the synthesized image of the virtual view. Referring to FIG. 5, to generate a synthesized image with respect to a color image of a current view, the encoding apparatus 101 may use an already encoded color image and a depth image of a peripheral view. In addition, to generate a synthesized image with respect to a depth image of a current view, the encoding apparatus 101 may use an already encoded depth image of a peripheral view.

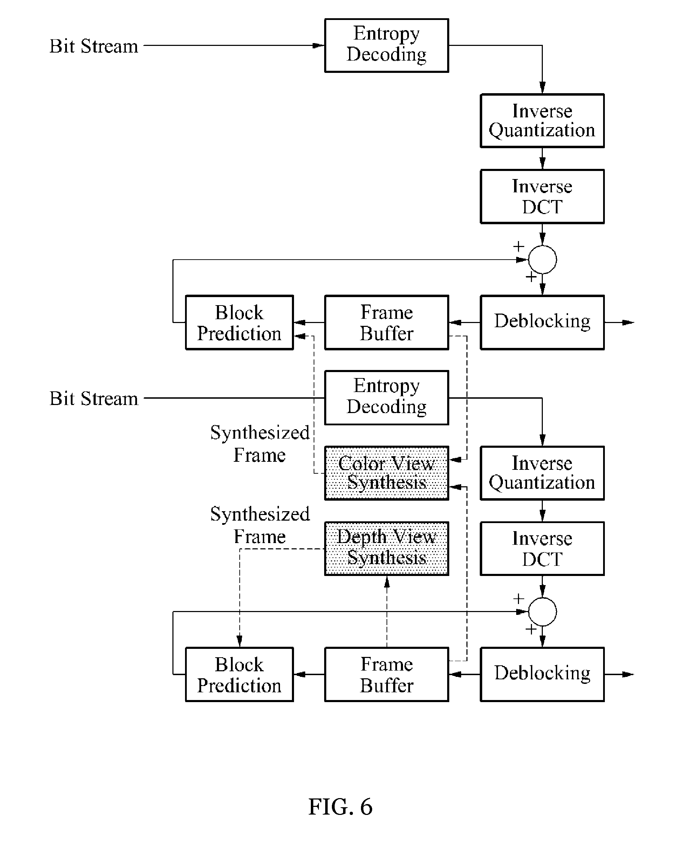

FIG. 6 illustrates a decoding system applying a decoding apparatus 102 according to example embodiments.

The decoding apparatus 102 shown in FIG. 6 may operate in the same manner or in a similar manner as the encoding apparatus 101 described with reference to FIG. 5 and therefore a similar detailed description will be omitted for conciseness.

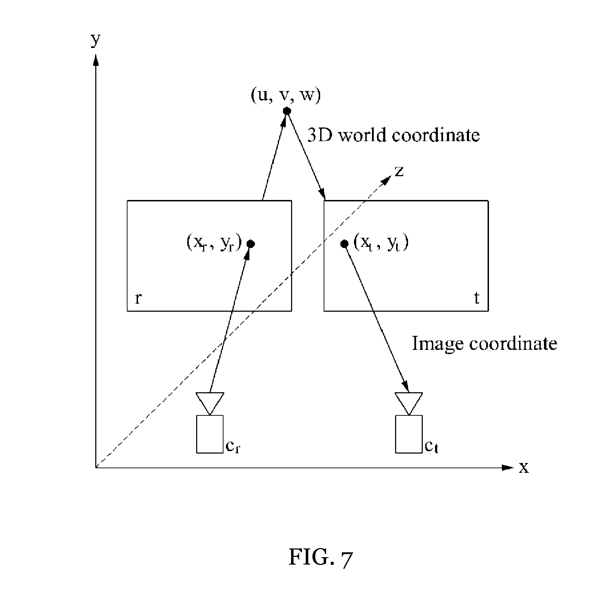

FIG. 7 illustrates a virtual view synthesis prediction method according to example embodiments.

A synthesized image of a virtual view with respect to a color image and a depth image may be generated using an already-encoded color image and depth image and camera parameter information. Specifically, the synthesized image of the virtual view with respect to the color image and the depth image may be generated according to Equation 1 through Equation 3 shown below.

[Equation 1]

$$Z(x_r, y_r, c_r) = \frac{1}{\frac{D(x_r, y_r, c_r)}{255}\left(\frac{1}{Z_{near}(c_r)} - \frac{1}{Z_{far}(c_r)}\right) + \frac{1}{Z_{far}(c_r)}}$$

In Equation 1, Z(Xr, Yr, Cr) denotes depth information, D denotes a pixel value at a pixel position (x, y) in the depth image, and $Z_{near}$ and $Z_{far}$ denote nearest depth information and farthest depth information, respectively.

The encoding apparatus 101 may obtain actual depth information Z and then reflect a pixel $(x_r,y_r)$ of a reference view image to a 3D world coordinate system (u,v,w) as shown in Equation 2, to synthesize an image r of a reference view into an image t of a target view. Here, the pixel $(x_r,y_r)$ may refer to a pixel of the color image when the virtual view synthesis is performed with respect to the color image, and a pixel of the depth image when the virtual view synthesis is performed with respect to the depth image.

[Equation 2]

$$[u, v, w]^T = R(c_r) \cdot A(c_r)^{-1} \cdot [x_r, y_r, 1]^T \cdot Z(x_r, y_r, c_r) + T(c_r)$$

In Equation 2, A denotes an intrinsic camera matrix, R denotes a camera rotation matrix, T denotes a camera translation vector, and Z denotes the depth information.

Therefore, the encoding apparatus 101 may reflect the 3D world coordinate system (u,v,w) to an image coordinate system $(x_t \cdot z_t, y_t . z_t, z_t)$ of the target view, which is performed according to Equation 3.

[Equation 3]

$$[x_t \cdot z_t, y_t \cdot z_t, z_t]^T = A(c_t) \cdot R(c_t)^{-1} \cdot \{[u, v, w]^T - T(c_t)\}$$

In Equation 3, $[x_t \cdot z_t, y_t \cdot z_t, z_t]$ denotes the image coordinate system and t denotes the target view.

Finally, a pixel corresponding to the image of the target view becomes $(x_t, v_t)$.

Here, a hole region, generated as the synthesized image of the virtual view is generated, may be filled using peripheral pixels. In addition, a hole map for determining the hole region may be generated to be used for compression afterwards.

Here, depth information $(Z_{near}/Z_{far})$ and camera parameter information (R/A/T) are additional pieces of information required to generate the synthesized image of the virtual view. Accordingly, the additional pieces of information are encoded by the encoding apparatus, included in a bit stream, and decoded by the decoding apparatus. For example, the decoding apparatus may selectively determine a method for transmitting the depth information and the camera parameter information, according to whether every image to be encoded using the synthesized image of the virtual view has the same depth information and camera parameter information.

That is, when the additional information such as the depth information and the camera parameter information are all the same in every image to be encoded, the encoding apparatus may transmit the additional pieces of information required for the virtual view synthesis to the decoding apparatus only once through the bit stream. When the additional pieces of information such as the depth information and the camera parameter information are all the same in every image to be encoded, the encoding apparatus may transmit the additional pieces of information to the decoding apparatus, per the GOP, through the bit stream.

When the additional pieces of information are varied according to the image to be encoded using the synthesized image of the virtual view, the encoding apparatus may transmit the additional pieces of information to the decoding apparatus through the bit stream, per the image to be encoded. Also, when the additional pieces of information are varied according to the image to be encoded, the encoding apparatus may transmit only the additional pieces of information varied according to the image to be encoded, to the decoding apparatus through the bit stream.

As further example embodiments, the synthesized image of the virtual view with respect to color images and depth images photographed by a 1D parallel arrangement of horizontally arranged cameras may be generated using Equation 4.

[Equation 4]

$$d = \frac{f_x(c_r) \cdot (t_x(c_t) - t_x(c_r))}{z(x_r, y_r, c_r)} + (p_x(c_t) - p_x(c_r))$$

In Equation 4, $f_x$ denotes a horizontal focal length of a camera, $t_x$ denotes translation of the camera along an x-axis, $p_x$ denotes a horizontal principal point, and d denotes the disparity, that is, a horizontal shift distance of the pixel.

Finally, the pixel ($x_r$, $y_r$) in the image of the reference view may be mapped to the pixel ($x_t$, $y_t$) of the image of the target view by as much as d.

Here, a hole region generated as the synthesized image of the virtual view is generated may be filled using peripheral pixels. In addition, a hole map for determining the hole region may be generated to be used for compression afterward. Here, the depth information ($Z_{near}/Z_{far}$) and the camera parameter information ($f_x$,$t_x$,$p_x$) are additionally required to generate the image of the virtual view. Therefore, the additional pieces of information may be encoded by the encoding apparatus, included in the bit stream, and decoded by the decoding apparatus. For example, the encoding apparatus may selectively determine a method for transmitting the depth information and the camera parameter information, according to whether every image to be encoded using the synthesized image of the virtual view has the same depth information and camera parameter information. That is, when the additional pieces of information such as the depth information and the camera parameter information are all the same in every image to be encoded, the encoding apparatus may transmit the additional pieces of information required for the virtual view synthesis to the decoding apparatus only once through the bit stream. When the additional pieces of information such as the depth information and the camera parameter information are all the same in every image to be encoded, the encoding apparatus may transmit the additional pieces of information to the decoding apparatus, per the GOP, through the bit stream.

In addition, when the additional pieces of information are varied according to the image to be encoded using the synthesized image of the virtual view, the encoding apparatus may transmit the additional pieces of information to the decoding apparatus through the bit stream, per the image to be encoded. Also, when the additional pieces of information are varied according to the image to be encoded, the encoding apparatus may transmit only the additional pieces of information varied according to the image to be encoded, to the decoding apparatus through the bit stream.

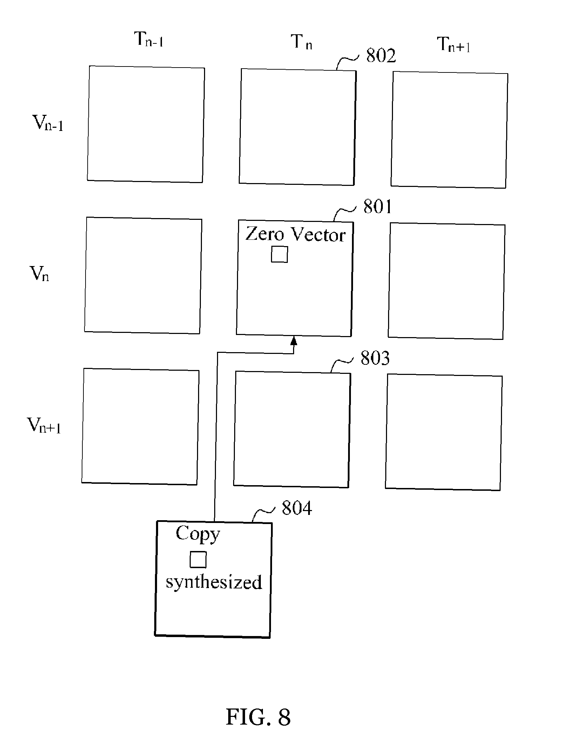

FIG. 8 illustrates a skip mode of the virtual view synthesis prediction method, according to example embodiments.

Referring to FIG. 8, the encoding apparatus 101 may generate a synthesized image 804 of a virtual view using first images 802 and 803 of peripheral views of a second image 801 of a current view. Here, the virtual view to be synthesized may refer to the current view. Therefore, the synthesized image 804 of the virtual view may have similar characteristics to the second image 801 of the current view. The first images 802 and 803 of the peripheral views may already be encoded prior to encoding of the second image 801 of the current view, and stored as reference images of the second image 801, such as in a frame buffer, as shown in FIG. 5.

The encoding apparatus 101 may select a first encoding mode that searches for a zero vector block that is in the same location as a current block in the synthesized image 804 of the virtual view, and may replace the current block with the zero vector block. Actually, the first encoding mode may replace the zero vector block included in the synthesized image 804 of the virtual view, without encoding the current block included in the second image 801. In this case, the first encoding mode may represent a virtual view synthesis skip mode.

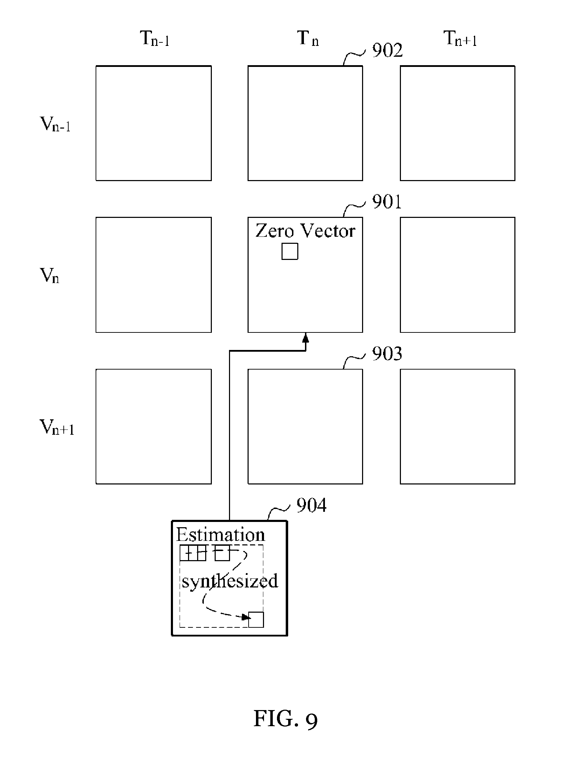

FIG. 9 illustrates a residual signal encoding mode of the virtual view synthesis prediction method, according to example embodiments.

Referring to FIG. 9, the encoding apparatus 101 may generate a synthesized image 904 of a virtual view using first images 902 and 903 of peripheral views of a second image 901 of a current view. The virtual view to be encoded may refer to a current view. Accordingly, the synthesized image 904 of the virtual view may have similar characteristics as the second image 901 of the current view. Here, the first images 902 and 903 of the peripheral views may already be encoded prior to encoding of the second image 901 of the current view, and stored as reference images of the second image 901, such as in the frame buffer, as shown in FIG. 5.

The encoding apparatus 101 may select a second encoding mode that searches for a zero vector block that is in the same location as the current block in the synthesized image 904 of the virtual view and may perform residual signal encoding based on a prediction block which is most similar to the current block to be encoded with respect to the zero vector block and on a virtual synthesis vector indicating the prediction block.

That is, the encoding apparatus 101 may search for a block most similar to the current block to be encoded, among blocks included in a predetermined region with respect to the zero vector block in the synthesized image 904 of the virtual view. Here, the block most similar to the current block may be defined as the prediction block. In addition, the encoding apparatus 101 may determine the virtual synthesis vector indicating the prediction block in the zero vector block. The encoding apparatus 101 may encode a differential signal between the current block included in the second image 801 and the prediction block, and the virtual synthesis vector corresponding to the prediction block, together. Here, the second encoding mode may represent a virtual view synthesis residual signal encoding mode.

At least one of the virtual view synthesis skip mode and the virtual view synthesis residual signal encoding mode may be used along with a currently defined encoding mode.

FIG. 10 illustrates blocks constituting a coding unit, according to example embodiments.

Referring to FIG. 10, the encoding apparatus 101 may use the coding unit to encode a 3D video. For example, a high efficiency video codec (HEVC), in contrast with codecs such as H.264/AVC, may perform encoding by splitting a single coding unit into a plurality of sub-blocks. A flag for recognizing the sub-blocks may be included in a bit stream and transmitted to the decoding apparatus 102. In the bit stream, a flag for recognizing how the coding unit is split into sub-blocks may be located before a flag for recognizing the encoding mode of each block.

The coding unit may include a single block, as in a coding block 1001, or a plurality of sub-blocks, as in coding units 1002 to 1004. Here, an encoding mode of the block constituting the coding unit 1001 may be determined to be the virtual view synthesis skip mode. The coding units 1001 to 1004 may be split step-by-step according to the encoding efficiency.

In the drawings of the coding units 1001 to 1004 of FIG. 10, "VS" refers to the virtual view synthesis skip mode, "SKIP" refers to the currently defined skip mode, and "Residual" refers to a residual signal mode.

FIG. 11 illustrates a bit stream including a flag, according to example embodiments.

Referring to FIG. 11, a bit stream 1101 and a bit stream 1102 may include a first flag (Split_coding_unit_flag) for recognition of whether at least one block constituting a coding unit is split, a second flag (View_synthesis_skip_flag) for recognition of a skip mode related to virtual view synthesis prediction, and a third flag (Skip_flag) for recognition of a currently defined skip mode.

The first flag (Split_coding_unit_flag) may inform whether the block is further split. For example, when a value of the first flag is 1, the block is further split. When the value of the first flag is 0, the block is not further split but rather is encoded as a block similar in size to the block before any splitting occurs. That is, when the value of the first flag is 0, the block is not split further but rather is determined to be the block that is to be finally encoded. In this case, the second flag and the third flag may be located after the value of the first flag determined to be 0.

For example, when the value of the first flag is 0 in the bit stream, the coding block is not split but coded as a whole block, that is, in the same structure as the coding block 1001 shown in FIG. 10.

When values of the first flag are located in order of 1 and 0 in the bit stream, it means the coding block is split once, that is, in the same structure as the coding block 1003 shown in FIG. 10.

As shown in the bit stream 1101, the second flag may be located after the third flag while the second flag and the third flag are located after the first flag. The third flag may be located between the first flag and the second flag.

As shown in the bit stream 1102, the third flag may be located after the second flag while the second flag and the third flag are located after the first flag. The second flag may be located between the first flag and the third flag.

In the bit stream 1101, when a value of the third flag is 0 with respect to the block constituting the coding block, the encoding apparatus 101 may not include any information on the corresponding block in the bit stream 1101 after transmission of the third flag.

In the bit stream 1101, when the value of the third flag is 0 and the value of the second flag is 1 with respect to the block constituting the coding block, the encoding apparatus 101 may not include any other information in the bit stream 1101 after transmission of the second flag.

Additionally, in the bit stream 1101, when the value of the third flag is 0 and the value of the second flag is 0 with respect to the block constituting the coding block, the encoding apparatus 101 may include residual data, that is, a result of encoding with respect to the third flag, the second flag, and the residual signal, in the bit stream 1101.

In the bit stream 1102, when the value of the second flag is 1 with respect to the block constituting the coding unit, the encoding apparatus 101 may not include any information on the corresponding block in the bit stream 1102 after transmission of the second flag.

In the bit stream 1102, when the value of the second flag is 0 and the value of the third flag is 1 with respect to the block constituting the coding block, the encoding apparatus 101 may not include any other information in the bit stream 1102 after transmission of the third flag.

In addition, in the bit stream 1102, when the value of the first flag is 0 and the value of the third flag is 0 with respect to the block constituting the coding block, the encoding apparatus 101 may include the residual data, that is, a result of encoding with respect to the second flag, the third flag, and the residual signal, in the bit stream 1102.

In addition, according to the example embodiments, during generation of the synthesized image of the virtual view, whether a corresponding region is the hole may be determined using the hole map. When the corresponding region is the hole, the encoding apparatus 101 may not use the virtual view synthesis method according to the example embodiments.

That is, when the corresponding region is the hole, the encoding apparatus 101 may not use the skip mode related to virtual view synthesis prediction corresponding to the second flag. When the corresponding region is not the hole, the encoding apparatus 101 may not use the currently defined skip mode.

According to the example embodiments, when the image to be encoded is a non-anchor frame, the encoding apparatus 101 may not use the skip mode related to virtual view synthesis prediction corresponding to the second flag. That is, when the image to be encoded is the non-anchor frame, the encoding apparatus 101 may not set the second flag corresponding to the skip mode related to virtual view synthesis prediction.

In addition, when the corresponding image is an anchor frame, the encoding apparatus 101 may not use the currently defined skip mode corresponding to the third flag. That is, when the image to be encoded is the anchor frame, the encoding apparatus 101 may not set the third flag corresponding to the currently defined skip mode.

The decoding apparatus 102 may always extract the first flag and then the third flag from the bit stream 1101 transmitted from the encoding apparatus 101, and extract the second flag when the value of the third flag is 0. In addition, the decoding apparatus 102 may always extract the first flag and then the second flag from the bit stream 1102 transmitted from the encoding apparatus 101, and extract the third flag when the value of the second flag is 0.

The methods according to the above-described example embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like.

Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. Any one or more of the software modules described herein may be executed by a dedicated processor unique to that unit or by a processor common to one or more of the modules. The described methods may be executed on a general purpose computer or processor or may be executed on a particular machine such as the encoding apparatus and decoding apparatus described herein.

Although example embodiments have been shown and described, it would be appreciated by those skilled in the art that changes may be made in these example embodiments without departing from the principles of the invention, the scope of which is defined in the claims and their equivalents.

## Claims

**1.** An encoding apparatus comprising:

a synthesized image generation unit to generate a synthesized image of a virtual view by synthesizing first images of peripheral views that are already encoded;
an encoding mode determination unit to determine an encoding mode of at least one block constituting a coding unit, among blocks included in a second image of a current view; and
an image encoding unit to generate a bit stream by encoding the at least one block constituting the coding unit based on the encoding mode determined by the encoding mode determination unit.

**2.** The encoding apparatus of claim 1, wherein the encoding mode comprises an encoding mode related to virtual view synthesis prediction and the encoding mode related to virtual view synthesis prediction comprises at least one of a first encoding mode, which is a skip mode and that does not encode block information in the synthesized image of the virtual view, and a second encoding mode, which is a residual signal encoding mode that encodes the block information;
wherein the first encoding mode and the second encoding mode preferably each use a zero vector block, which is in a same location as a current block included in the second image, in the synthesized image of the virtual view;
wherein the encoding mode determination unit preferably determines an optimum encoding mode having a highest encoding efficiency from among the encoding mode related to virtual view synthesis prediction and a currently defined encoding mode, the encoding mode determination unit preferably excluding an encoding efficiency of the encoding mode related to virtual view synthesis prediction when a skip mode included in the currently defined encoding mode is determined to be the optimum encoding mode.

**3.** The encoding apparatus of claim 2, further comprising:

a flag setting unit to set, in the bit stream, a first flag for informing whether the at least one block constituting the coding unit is split, a second flag for recognition of a skip mode related to the virtual view synthesis prediction, and a third flag for recognition of a currently defined skip mode;
wherein the flag setting unit preferably locates the second flag after the third flag or locates the third flag after the second flag in the bit stream; and/or
wherein the flag setting unit preferably locates the second flag after the first flag or locates the third flag after the first flag in the bit stream; and/or
wherein the flag setting unit preferably locates the third flag between the first flag and the second flag or locates the second flag between the first flag and the third flag.

**4.** The encoding apparatus of any of the previous claims, wherein the image encoding unit generates the bit stream to include depth information and camera parameter information, each of which are necessary for generating the synthesized image of the virtual view;
wherein the image encoding unit preferably selectively determines a method for transmitting the depth information and the camera parameter information, according to whether every image to be encoded using the synthesized image of the virtual view has a same depth information and camera parameter information.

**5.** The encoding apparatus of any of the previous claims, wherein the synthesized image generation unit determines whether a hole region is generated during generation of the synthesized image of the virtual view using a hole map, and fills the hole region with peripheral pixels.

**6.** The encoding apparatus of claim 3, wherein the flag setting unit does not set the second flag corresponding to the skip mode related to the virtual view synthesis prediction when a hole region is generated in the synthesized image of the virtual view; and/or
wherein the flag setting unit does not set the third flag corresponding to the currently defined skip mode when a hole region is not generated in the synthesized image of the virtual view; and/or
wherein the flag setting unit does not set the second flag corresponding to the skip mode related to the virtual view synthesis prediction when a frame to be encoded is a non-anchor frame; and/or
wherein the flag setting unit does not set the third flag corresponding to the currently defined skip mode when a frame to be encoded is an anchor frame.

**7.** A decoding apparatus comprising:

a synthesized image generation unit to generate a synthesized image of a virtual view by synthesizing first images of peripheral views that are already decoded; and
an image decoding unit to decode at least one block constituting a coding unit among blocks included in a second image of a current view, using a decoding mode extracted from a bit stream received from an encoding apparatus.

**8.** The decoding apparatus of claim 7, wherein the decoding mode comprises an encoding mode related to virtual view synthesis prediction and the encoding mode related to virtual view synthesized image comprises at least one selected from a first decoding mode which is a skip mode that does not decode block information in the virtual view synthesis prediction and a second decoding mode which is a residual signal decoding mode that decodes the block information;
wherein the first decoding mode and the second decoding mode preferably each use a zero vector block, which is in a same location as a current block included in the second image, in the synthesized image of the virtual view.

**9.** The decoding apparatus of claim 7 or 8, further comprising:

a flag setting unit to extract, from the bit stream, a first flag for informing whether the at least one block constituting the coding unit is split, a second flag for recognition of a skip mode related to the virtual view synthesis prediction, and a third flag for recognition of a currently defined skip mode.

**10.** The decoding apparatus of claim 9, wherein the bit stream is configured such that the second flag is located after the third flag or that the third flag is located after the second flag; and/or
wherein the bit stream is configured such that the second flag is located after the first flag or that the third flag is located after the first flag; and/or
wherein the bit stream is configured such that the third flag is located between the first flag and the second flag or that the second flag is located between the first flag and the third flag.

**11.** The decoding apparatus of any of the claims 9-10, wherein the bit stream does not include the second flag corresponding to the skip mode related to the virtual view synthesis prediction when a hole region is generated in the synthesized image of the virtual view; and/or
wherein the bit stream does not include the third flag corresponding to the currently defined skip mode when a hole region is not generated in the synthesized image of the virtual view; and/or
wherein the bit stream does not include the second flag corresponding to the skip mode related to the virtual view synthesis prediction when a frame to be encoded is a non-anchor frame; and/or
wherein the bit stream does not include the third flag corresponding to the currently defined skip mode when a frame to be encoded is an anchor frame.

**12.** The decoding apparatus of any of the claims 9-11, wherein the image decoding unit decodes depth information and camera parameter information, which are necessary for generating the synthesized image of the virtual view from the bit stream;
wherein the bit stream preferably selectively comprises the depth information and the camera parameter information according to whether every image to be encoded using the synthesized image of the virtual view has a same depth information and camera parameter information.

**13.** An encoding method performed by an encoding apparatus, the encoding method comprising:

generating a synthesized image of a virtual view by synthesizing first images of peripheral views, the first images which are already encoded;
determining an encoding mode of each of at least one block constituting a coding unit, among blocks included in a second image of a current view; and
generating a bit stream by encoding the at least one block constituting the coding unit based on the encoding mode.

**14.** A decoding method comprising:

generating a synthesized image of a virtual view by synthesizing first images of peripheral views which are already decoded; and
decoding at least one block constituting a coding unit among blocks included in a second image of a current view, using a decoding mode extracted from a bit stream received from an encoding apparatus,
wherein the decoding mode comprises a decoding mode related to virtual view synthesis prediction.

**15.** A non-transitory computer readable recording medium storing a program to cause a computer to implement the method of one of claims 13 and 14.

101
102
ENCODING APPARATUS
BIT STREAM
DECODING APPARATUS

FIG. 1

101
201
SYNTHESIZED IMAGE GENERATION UNIT
202
ENCODING MODE DETERMINATION UNIT
203
IMAGE ENCODING UNIT
204
FLAG SETTING UNIT
BIT STREAM
102
DECODING APPARATUS

FIG. 2

102
101
FLAG EXTRACTION UNIT
301
ENCODING APPARATUS
BIT STREAM
SYNTHESIZED IMAGE GENERATION UNIT
302
IMAGE DECODING UNIT
303

FIG. 3

I-VIEW
B-VIEW
P-VIEW
I
B
P

FIG. 4

Color
+
-
DCT
Quantization
Entropy Coding
Inverse Quantization
Inverse DCT
+
+
Block Prediction
Frame Buffer
Deblocking
Depth
+
-
DCT
Quantization
Entropy Coding
Synthesized Frame
Color View Synthesis
Inverse Quantization
Synthesized Frame
Depth View Synthesis
Inverse DCT
+
+
Block Prediction
Frame Buffer
Deblocking

FIG. 5

Bit Stream
Entropy Decoding
Inverse Quantization
Inverse DCT
+
+
Block Prediction
Frame Buffer
Deblocking
Bit Stream
Entropy Decoding
Synthesized Frame
Color View Synthesis
Inverse Quantization
Synthesized Frame
Depth View Synthesis
Inverse DCT
+
+
Block Prediction
Frame Buffer
Deblocking

FIG. 6

y
(u, v, w)
3D world coordinate
z
(xr, yr)
(xt, yt)
r
t
Image coordinate
cr
ct
x

FIG. 7

Tn-1
Tn
Tn+1
802
Vn-1
801
Zero Vector
Vn
803
Vn+1
804
Copy
synthesized

FIG. 8

$T_{n-1}$
$T_n$
$T_{n+1}$
902
$V_{n-1}$
901
Zero Vector
$V_n$
903
$V_{n+1}$
904
Estimation
synthesized


FIG. 9

1001
1002
View Synthesis SKIP(VS)
Residual
SKIP
VS
VS
Residual
SKIP
SKIP
SKIP
VS
VS
Residual
Residual
Residual
Residual
VS
Residual
Residual
Residual
VS
VS
SKIP
VS
VS
SKIP
1003
1004

FIG. 10

1101
Split_coding_unit_flag
Skip_flag
View_synthesis_skip_flag
Residual data
Split_coding_unit_flag
Skip_flag
View_synthesis_skip_flag
Residual data
1102
Split_coding_unit_flag
View_synthesis_skip_flag
Skip_flag
Residual data
Split_coding_unit_flag
View_synthesis_skip_flag
Skip_flag
Residual data

FIG. 11